# FASCICULE DE BREVET EUROPEEN

(11) **EP 3 055 170 B1**
(45) Date de publication et mention de la délivrance du brevet: **04.10.2017**
(21) Numéro de dépôt: 14781608.6
(22) Date de dépôt: 09.10.2014
(51) Int. Cl.: B60R 19/34, F16F 7/12, B60R 19/26

(54) **SYSTEME AMORTISSEUR DE CHOC POUR VEHICULE AUTOMOBILE**
STOSSDÄMPFERANORDNUNG FÜR EIN KRAFTFAHRZEUG
SHOCK ABSORBER SYSTEM FOR A MOTOR VEHICLE

(30) Priorité: 09.10.2013 FR 1359795
(43) Date de publication de la demande: 17.08.2016
(73) Titulaire: Autotech Engineering, A.I.E., 48340 Amorebieta-Etxano (ES)
(72) Inventeur: CAZES, Christophe, F-78000 Versailles (FR); GATARD, Grégory, F-91310 Leuville sur Orge (FR); LEROY, Emmanuel, F-91370 Verrieres le Buisson (FR); NIESS, Matthieu, 89200 Avallon (FR)
(74) Mandataire: ZBM Patents - Zea, Barlocci & Markvardsen
(86) Numéro de dépôt international: PCT/EP2014/071698
(87) Numéro de publication internationale: WO 2015/052298

(56) Documents cités:
- WO-A1-00/03909
- DE-A1- 10 257 262
- GB-A- 2 344 794
- US-A1- 2007 052 258

## Description

### DOMAINE DE L'INVENTION

La présente invention concerne le domaine des systèmes amortisseurs de chocs pour véhicules automobiles.

### ETAT DE LA TECHNIQUE

On a déjà réalisé de nombreuses pièces déformables pour absorber l'énergie de chocs sur des véhicules automobiles, afin de limiter la transmission de cette énergie vers l'habitacle.

On trouvera des exemples de systèmes amortisseurs connus dans les documents suivants: DE 10327604, US 2004/0060791, WO 2006/042974, DE 19745656, FR 2803571, FR 2844321, US 2002/0101086, FR 1530799, US 2005/0211520, FR 2903061, US 2005/0269824, US 2003/0057719, FR 2888545, US 2013/0119705, FR 2876646.

Les documents US 2007/052258, GB 2344794 et WO 00/03909 proposent des systèmes amortisseurs comprenant une cellule principale et une cellule secondaire de plus faible longueur que la cellule principale, adaptée pour être sollicitée en complément de la cellule principale, après une première phase de déformation de la cellule principale, lorsque le système reçoit un choc d'un deuxième niveau d'énergie supérieur à un premier d'énergie opérant la déformation initiale de la cellule principale.

### OBJET DE L'INVENTION

La présente invention a pour but de perfectionner les systèmes amortisseurs existants.

L'invention propose ainsi un système amortisseur de choc pour véhicule automobile comprenant une cellule principale adaptée pour être déformée en cas de choc d'un premier niveau d'énergie et une cellule secondaire de plus faible longueur que la cellule principale, adaptée pour être sollicitée en complément de la cellule principale, après une première phase de déformation de la cellule principale, lorsque le système reçoit un choc d'un deuxième niveau d'énergie supérieur au premier, la cellule secondaire étant configurée pour orienter la résultante d'application d'un effort sur une structure avale dans une direction non parallèle à l'axe longitudinal de cette structure avale.

La structure conforme à la présente invention permet de limiter les déformations à la seule cellule principale, pour tous les chocs dont le niveau d'énergie n'atteint pas le deuxième niveau d'énergie. Dans ce cas une réparation peut être réalisée facilement et à faible coût par un simple remplacement de la seule cellule principale, la cellule secondaire ainsi que les structures avales n'ayant pas subi de détériorations.

Lors de sa sollicitation, la cellule secondaire peut se déformer sous l'effet du choc de deuxième niveau d'énergie et/ou transmettre un effort résultant à une pièce de structure avale. Le fait que la cellule secondaire possède et/ou induise un axe de déformation différent de la cellule principale peut être adapté pour compenser totalement ou partiellement une dissymétrie du niveau de résistance de l'ensemble de la structure avale concernée, et/ou pour orienter la résultante d'application d'un effort sur une structure avale dans une direction non parallèle à la direction d'application de l'effort du au choc et ce faisant typiquement dans une direction non parallèle à l'axe longitudinal de cette structure avale.

Selon une première forme de réalisation de l'invention, la cellule secondaire est excentrée par rapport à la cellule principale.

Selon une deuxième forme de réalisation de l'invention, la cellule secondaire est centrée par rapport à la cellule principale.

Avantageusement, la cellule secondaire possède une géométrie homothétique de la cellule principale.

Avantageusement, la cellule secondaire présente une géométrie adaptée pour induire un axe de déformation différent de la cellule principale. La géométrie de la cellule secondaire adaptée pour induire un axe de déformation différent de la cellule principale est par exemple choisie parmi le groupe comprenant :
- une épaisseur de paroi différente entre deux parois de la cellule secondaire,
- une rainure s'étendant sur une paroi de la cellule secondaire,
- une section de la forme d'un hexagone non régulier,
- une section en forme de U,
- un assemblage d'une première et d'une deuxième pièces chacune pourvues d'une paire d'ailettes par l'intermédiaire desquelles les première et deuxième pièces sont fixées l'une à l'autre de sorte à former la cellule secondaire,
- une section tétragonale avec au moins deux parois adjacentes de la cellule secondaire non orthogonales entre elles,
- un chevauchement de bords d'une plaque à partir de laquelle est formée la cellule secondaire par pliage,
- une soudure entre eux de bords d'une plaque à partir de laquelle est formée la cellule secondaire par pliage.

Avantageusement, la cellule secondaire présente des découpes pour induire un axe de déformation différent de la cellule principale.

Avantageusement, la cellule secondaire présente un élément d'amorce configuré pour amorcer la déformation de la cellule secondaire dans un axe de déformation différent de la cellule principale. L'élément d'amorce est par exemple une pré-déformation de la cellule secondaire et/ou des ouvertures placées sur des arêtes de la cellule secondaire.

Avantageusement, la cellule secondaire présente une zone de plus faible résistance mécanique obtenue par traitement thermique de la cellule secondaire.

Avantageusement, la cellule secondaire présente des renforts.

Avantageusement, la cellule secondaire comprend un corps principal formé d'un premier matériau, et un élément secondaire formé d'un deuxième matériau présentant des caractéristiques mécaniques différentes du premier matériau.

La cellule secondaire est de préférence logée dans la cellule principale.

Selon un mode de réalisation de l'invention, la cellule secondaire est adaptée pour se déformer sous l'effet du choc de deuxième niveau d'énergie. Selon une variante, la cellule secondaire est adaptée pour transmettre un effort résultant à une pièce de structure avale.

La cellule principale et/ou la cellule secondaire est par exemple réalisée en acier.

L'une au moins des cellules est par exemple formée d'une pièce tubulaire centrée sur un axe longitudinal parallèle à la direction d'application d'un effort sous l'effet d'un choc.

Avantageusement, le système comprend par exemple plusieurs cellules secondaires imbriquées en gigogne dans la cellule principale.

L'une au moins des cellules possède par exemple une section droite en rectangle.

L'une au moins des cellules possède par exemple une section constante sur toute sa longueur le long de son axe longitudinal O-O et une épaisseur constante sur toute sa longueur selon cet axe.

L'une au moins des cellules possède par exemple une section et/ou une épaisseur qui évolue sur la longueur de la cellule.

La cellule secondaire est par exemple formée d'une pièce d'épaisseur globalement supérieure à la cellule principale pour présenter une résistance à la déformation en compression longitudinale, supérieure à celle de la cellule principale.

Avantageusement, le système est placé entre une extrémité d'une traverse de parechoc et une extrémité avant d'un longeron avant encadrant un compartiment moteur de véhicule automobile.

Avantageusement, la cellule secondaire est placée en position excentrée dans la cellule principale, en position adjacente à la face interne d'un longeron aval.

### PRESENTATION DES FIGURES

D'autres caractéristiques, buts et avantages de la présente invention apparaîtront à la lecture de la description détaillée qui va suivre et en regard des dessins annexés donnés à titre d'exemples non limitatifs et sur lesquels :
- la figure 1 représente une vue schématique en perspective au repos d'un système amortisseur selon une première forme de réalisation de l'invention, selon une vue partiellement éclatée de la cellule principale afin de mettre en évidence la cellule secondaire,
- les figures 2 et 3 représentent des vues schématiques similaires du même système amortisseur à deux étapes successives de déformation,
- la figure 4 représente une variante de réalisation selon la première forme de réalisation de l'invention,
- la figure 5 représente une variante de réalisation d'un système amortisseur comprenant trois cellules imbriquées en gigogne,
- la figure 6 représente de manière schématique la structure de base d'un châssis de véhicule automobile pour illustrer une application préférentielle de la première forme de réalisation de l'invention,
- la figure 7 représente une vue en perspective d'un mode de réalisation particulier de la première forme de réalisation de l'invention,
- la figure 8 représente une vue du même mode de réalisation particulier selon une vue latérale et partiellement en coupe longitudinale,
- la figure 9 représente une vue du même mode de réalisation particulier selon une vue en coupe transversale et illustre diverses possibilités d'excentrer la cellule secondaire dans la cellule principale,
- la figure 10 représente une vue similaire à la figure 9 illustrant la cellule secondaire dans deux positions alternatives, centrée et excentrée, ainsi que en superposition la section d'une pièce avale formée d'un longeron avant de véhicule automobile,
- la figure 11 représente une vue schématique de dessus d'un ensemble conforme à la première forme de réalisation de l'invention et illustre l'application de l'effort sur une pièce de structure avale formée d'un longeron associée à une cellule secondaire excentrée dans la cellule principale,

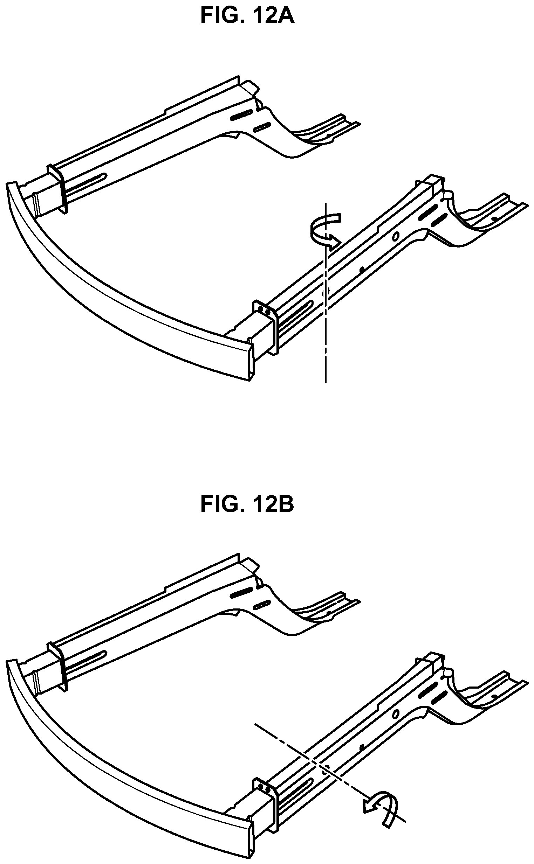

- les figures 12A et 12B représentent des vues schématiques d'un ensemble composé d'une traverse avant de parechoc reliée à des longerons avants par l'intermédiaire de systèmes amortisseurs conformes à la première forme de réalisation de l'invention et illustrent respectivement un moment de flexion selon un axe vertical Z transversal à l'axe longitudinal d'un longeron avant, pour la figure 12A, et un moment de flexion selon un axe horizontal Y transversal à l'axe longitudinal du longeron, pour la figure 12B,
- la figure 13A représente les moments autour de l'axe vertical Z en fonction du temps respectivement pour un système amortisseur conforme à la première forme de réalisation de l'invention sur la courbe marquée d'une croix et pour un amortisseur classique pour la courbe marquée d'un cercle,
- la figure 13B représente les moments autour de l'axe horizontal Y en fonction du temps respectivement pour un système amortisseur conforme à la première forme de réalisation de l'invention sur la courbe marquée d'une croix et pour un amortisseur classique pour la courbe marquée d'un cercle,

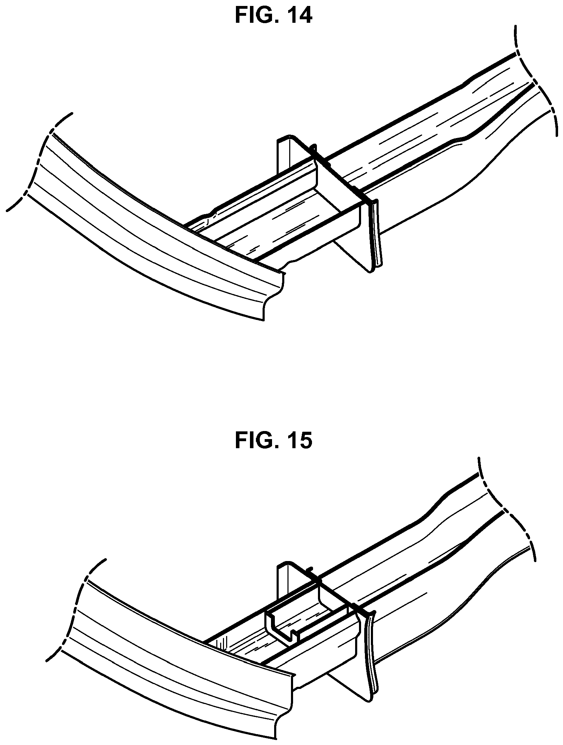

- les figures 14 et 15 représentent respectivement un système amortisseur connu de l'état de la technique et un système amortisseur conforme à la première forme de réalisation de l'invention, intercalés entre une extrémité d'une traverse de parechoc et une extrémité d'un longeron avant, et
- les figures 16a, 16b et 16c représentent les déformations du système amortisseur conforme à l'état de la technique illustré sur la figure 14 aux trois instants a, b et c répertoriés sur les figures 13A et 13B tandis que
- les figures 17a, 17b et 17c représentent les déformations du système amortisseur conforme à la première forme de réalisation de l'invention illustré sur la figure 15 aux trois mêmes instants a, b et c répertoriés sur les figures 13A et 13B,
- les figures 18a à 18h représentent une vue schématique en perspective au repos d'un système amortisseur selon une deuxième forme de réalisation de l'invention, selon une vue partiellement éclatée de la cellule principale afin de mettre en évidence la cellule secondaire,
- les figures 19a et 19b représentent une vue schématique au repos d'un système amortisseur selon une variante de la deuxième forme de réalisation de l'invention,
- les figures 20a et 20b représentent une vue schématique au repos d'un système amortisseur selon une autre variante de la deuxième forme de réalisation de l'invention,
- la figure 21 représente une vue schématique au repos d'un système amortisseur selon une autre variante de la deuxième forme de réalisation de l'invention,
- les figures 22a et 22b représentent une vue schématique au repos d'un système amortisseur selon une autre variante de la deuxième forme de réalisation de l'invention, et
- les figures 23a et 23b représentent une vue schématique au repos d'un système amortisseur selon une autre variante de la deuxième forme de réalisation de l'invention,
- la figure 24 représente une vue schématique au repos d'un système amortisseur selon une troisième forme de réalisation de l'invention.

### DESCRIPTION DETAILLEE

Comme indiqué précédemment, la présente invention concerne un système amortisseur de choc 10 pour véhicule automobile comprenant une cellule principale 100 adaptée pour être déformée en cas de choc d'un premier niveau d'énergie et une cellule secondaire 200 de plus faible longueur adaptée pour être sollicitée en complément de la cellule principale 100 après une première phase de déformation de la cellule principale 100, lorsque le système reçoit un choc d'un deuxième niveau d'énergie supérieur au premier, la cellule secondaire 200 étant configurée pour orienter la résultante d'application d'un effort sur une structure avale 30 dans une direction non parallèle à l'axe longitudinal de cette structure avale 30.

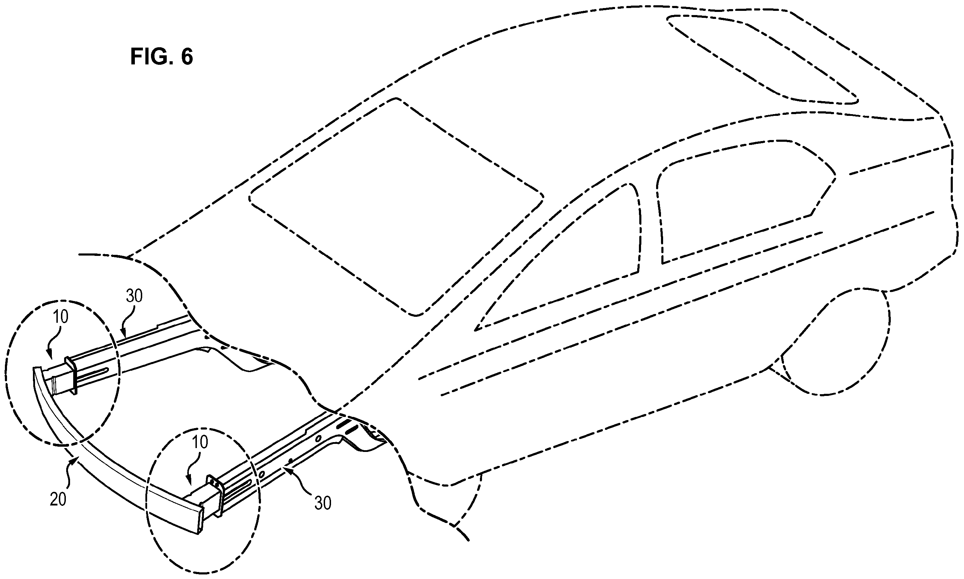

Le système amortisseur 10 composé de la combinaison de la cellule principale 100 et de la cellule secondaire 200 est placé entre une pièce de structure amont 20, par exemple une traverse de parechoc et une pièce de structure avale 30, par exemple l'extrémité avant d'un longeron de véhicule. On retrouve sur la figure 6 deux systèmes amortisseurs 10 placés respectivement entre les extrémités d'une traverse 20 de parechoc et les extrémités avants de longerons avants 30 encadrant le compartiment moteur.

De préférence, les chocs des premier et deuxième niveaux d'énergie correspondent à des événements distincts. Autrement dit, les chocs des premier et deuxième niveaux d'énergie n'interviennent pas consécutivement. Il s'agit bien de deux scénarii de chocs distincts. Le niveau d'énergie des chocs varie en fonction du niveau de vitesses et/ou de la masse du véhicule lors de l'événement ou du scénario de chocs. Le choc correspondant au deuxième niveau d'énergie correspondra donc à un premier événement ou à un premier scénario de chocs au cours duquel le véhicule sera à un niveau de vitesses et/ou aura une masse plus élévés, tandis que le choc correspondant au premier niveau d'énergie correspondra à un deuxième événement ou à un deuxième scénario au cours duquel le véhicule sera à un niveau de vitesses et/ou aura une masse plus faible.

De préférence, la cellule secondaire 200 possède et/ou induit un axe de déformation différent de la cellule principale 100. On entend par « la cellule secondaire 200 possède un axe de déformation différent de la cellule principale 100 » le fait que la cellule secondaire 200 est configurée pour se déformer en compression axiale et/ou en flexion selon un axe différent de la cellule principale 100. On entend par « la cellule secondaire 200 induit un axe de déformation différent de la cellule principale 100 » le fait que la cellule secondaire 200 est configurée pour transférer un effort à la pièce de structure avale 30 selon un axe de déformation différent de la cellule principale 100. Dans ce cas, la cellule secondaire 200 peut ou non se déformer. Les dispositions qui précèdent permettent que la cellule secondaire 200 applique un moment de flexion sur la structure avale 30 qui se déforme alors selon un axe différent de la cellule principale 100 (un ou plusieurs effets rotules).

Avantageusement, la cellule secondaire 200 est configurée pour orienter la résultante d'application d'un effort sur la structure avale 30 dans une direction non parallèle à la direction d'application de l'effort du au choc, et ce faisant typiquement dans une direction non parallèle à l'axe longitudinal de cette structure avale 30. En particulier, la portion d'effort transmise par la cellule secondaire 200 à la structure avale 30, lorsque cette cellule secondaire 200 est sollicitée, ne sera pas parallèle à l'axe longitudinal O-O.

Avantageusement, la cellule secondaire 200 est configurée pour compenser une dissymétrie du niveau de résistance de l'ensemble de la structure avale 30 concernée.

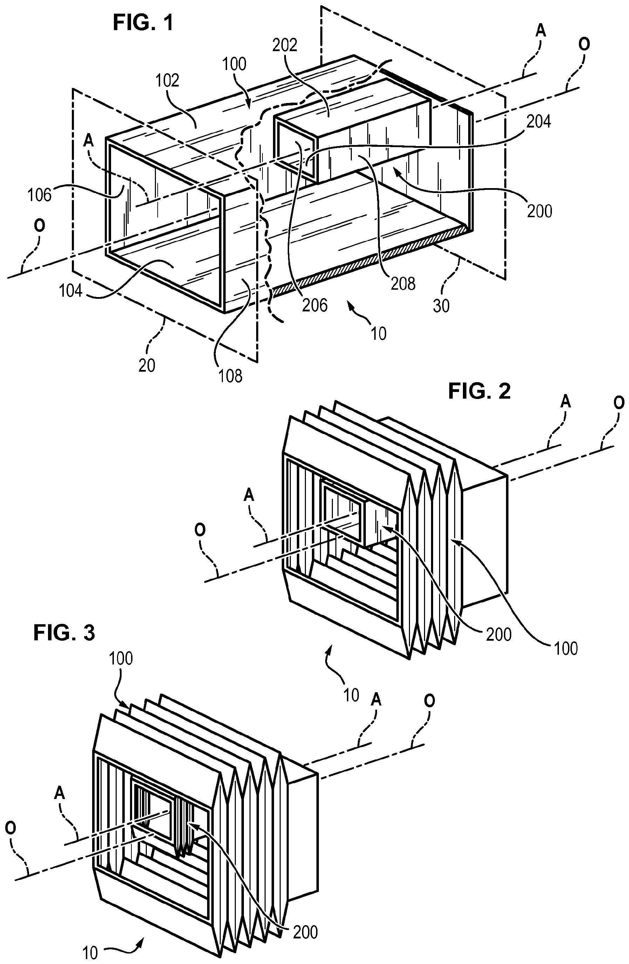

La cellule secondaire 200, de plus faible longueur que la cellule principale 100, peut être placée sur l'extérieur de la cellule principale 100. Cependant de préférence la cellule secondaire 200 est logée à l'intérieur de la cellule principale 100, comme on le voit sur la figure 1.

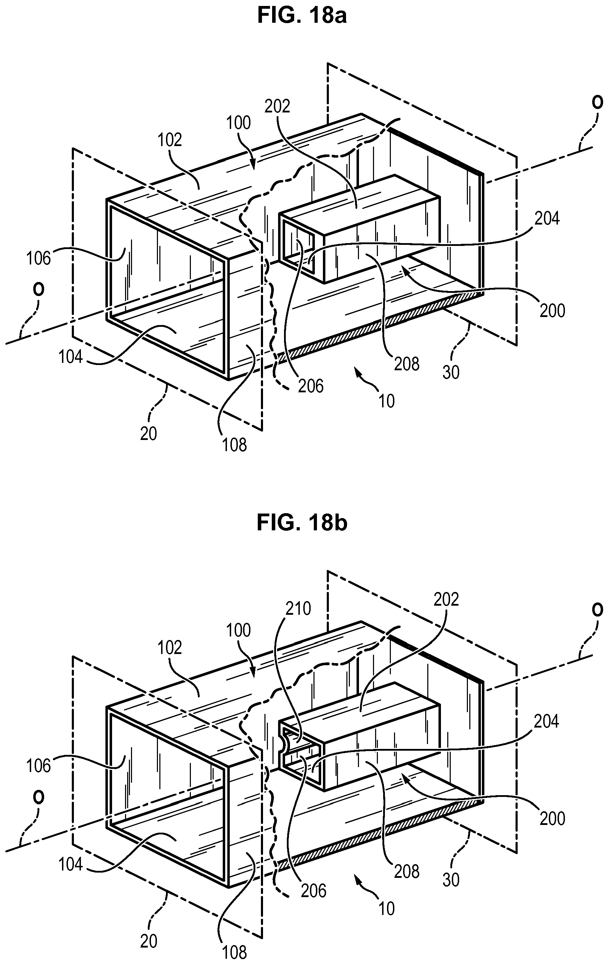

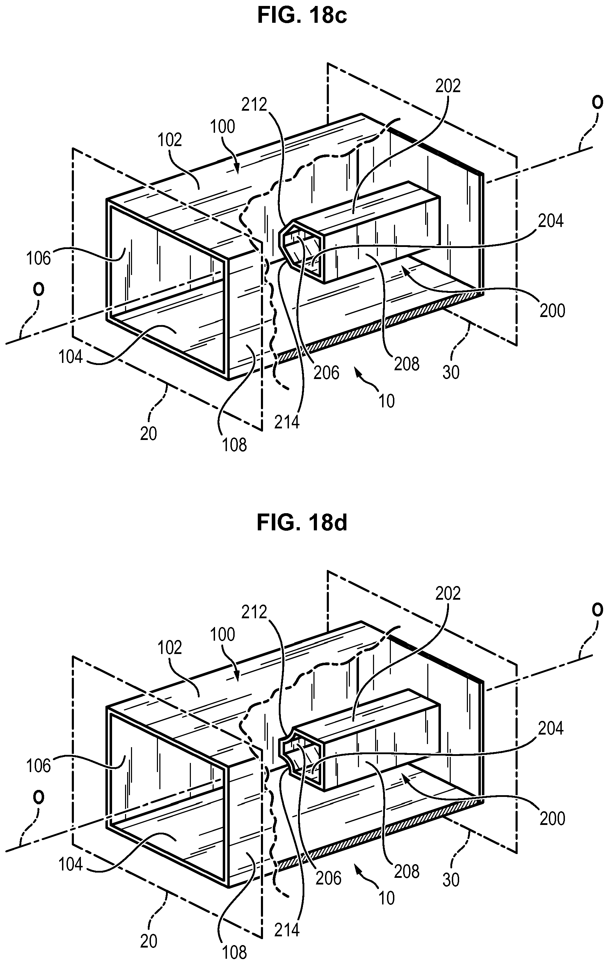

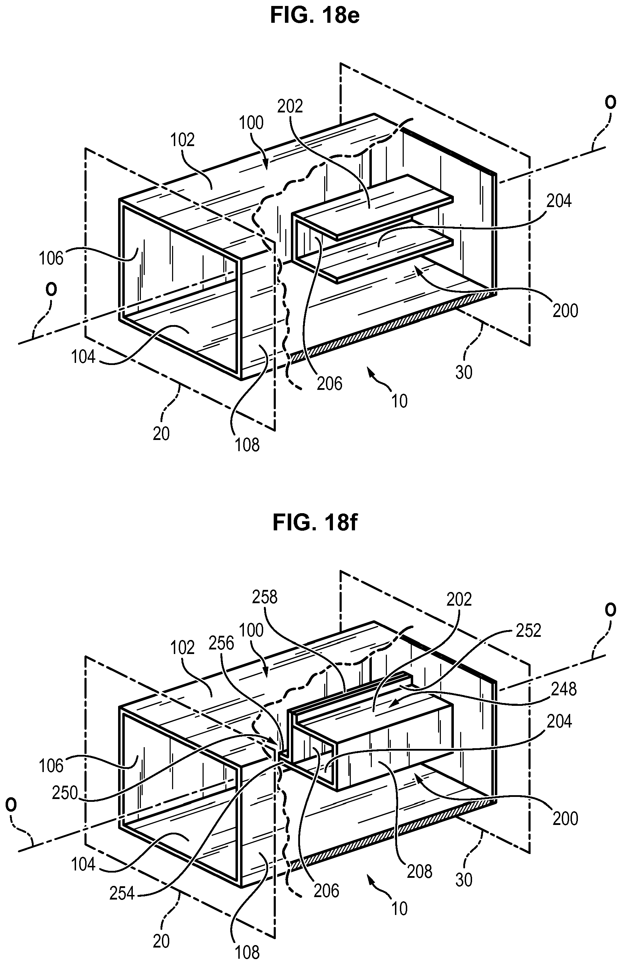

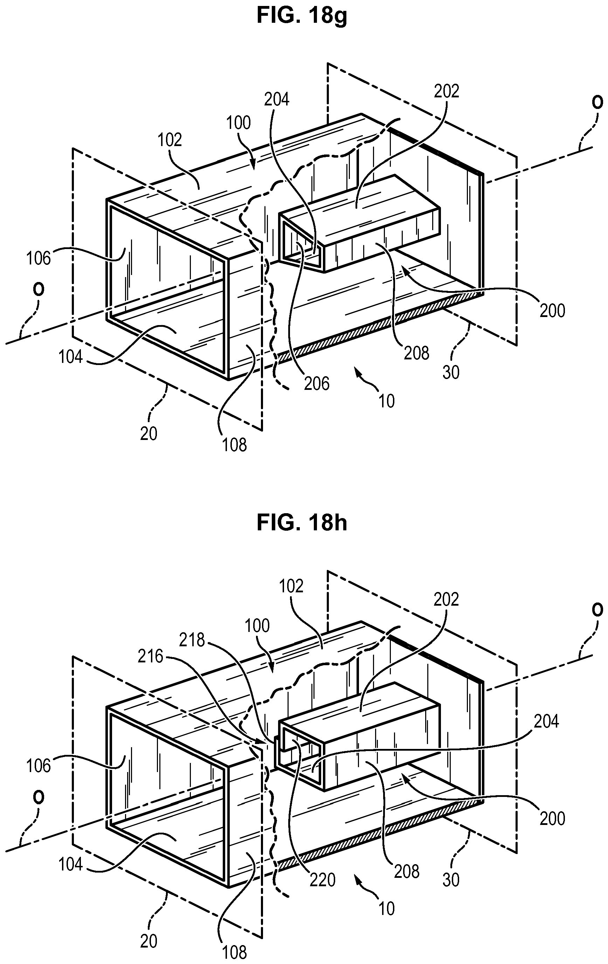

Selon les modes de réalisation particuliers représentés sur les figures 1 et 18, la cellule principale 100 est formée d'une pièce tubulaire de section rectangulaire centrée sur un axe longitudinal O-O globalement perpendiculaire à la face de contact entre la cellule principale 100 et la pièce de structure amont 20, c'est-à-dire globalement parallèle à la direction d'application d'un effort sous l'effet d'un choc frontal.

La cellule principale 100 possède ainsi deux parois horizontales 102 et 104 reliées par deux parois verticales 106 et 108.

Avantageusement, la cellule principale 100 est formée d'un métal, par exemple de l'acier. Bien entendu, la cellule principale 100 n'est pas limitée au mode de réalisation particulier représenté et peut posséder une section droite, transversale à l'axe longitudinal O-O, différente d'un rectangle, par exemple polygonale, circulaire, ovoïde ou autre, y compris une section ouverte par exemple en C.

Selon les représentations données sur les figures 1 et 18, la cellule principale 100 est de section constante sur toute sa longueur le long de l'axe longitudinal O-O et d'épaisseur constante sur toute sa longueur selon cet axe. En variante, la section et/ou l'épaisseur de la cellule principale 100 peuvent évoluer sur la longueur de la cellule principale 100 selon l'axe O-O.

Selon une première forme de réalisation de l'invention, la cellule secondaire 200 est excentrée par rapport à la cellule principale 100.

Selon la représentation donnée sur la figure 1, la cellule secondaire 200 est de géométrie homothétique de la cellule principale 100. Ainsi la cellule secondaire 200 est également formée d'une pièce tubulaire centrée sur un axe A-A qui lui est propre et qui est parallèle à l'axe longitudinal O-O mais distinct de celui-ci.

Selon le mode de réalisation particulier représenté sur la figure 1, la cellule secondaire 200 est ainsi également formée d'une pièce tubulaire de section rectangulaire.

La cellule secondaire 200 possède ainsi deux parois horizontales 202 et 204 reliées par deux parois verticales 206 et 208.

Elle est de préférence adjacente à la face arrière de la cellule principale 100, en appui contre la structure avale 30.

Avantageusement, la cellule secondaire 200 est également formée de métal, par exemple de l'acier. Bien entendu, la cellule secondaire 200 n'est pas limitée au mode de réalisation particulier représenté et peut posséder également une section droite différente d'un rectangle, par exemple polygonale, circulaire, ovoïde ou autre, y compris une section ouverte par exemple en C.

Selon la représentation donnée sur la figure 1, la cellule secondaire 200 est de section constante sur toute sa longueur le long de son l'axe longitudinal AO-AO et d'épaisseur constante sur toute sa longueur selon cet axe. En variante, la section et/ou l'épaisseur de la cellule secondaire 200 peuvent évoluer sur sa longueur selon l'axe AO-AO.

Lorsque la cellule secondaire 200 est placée à l'extérieur de la cellule principale 100, elle possède une section droite supérieure à celle de la cellule principale 100.

Inversement lorsque la cellule secondaire 200 est placée à l'intérieur de la cellule principale 100, elle possède une section droite inférieure à celle de la cellule principale 100, comme on le voit sur les figures annexées.

A titre d'exemple non limitatif, les dimensions de la cellule principale 100 et de la cellule secondaire 200 peuvent être les suivantes :
- longueur horizontale L1 de la cellule principale 100 de l'ordre de 127mm,
- hauteur verticale H1 de la cellule principale 100 de l'ordre de 100mm,
- largeur horizontale L1 de la cellule principale 100 de l'ordre de 60mm,
- longueur horizontale L2 de la cellule secondaire 200 de l'ordre de 62mm,
- hauteur verticale H2 de la cellule secondaire 200 de l'ordre de 40mm,
- largeur horizontale L2 de la cellule secondaire 200 de l'ordre de 20mm.

Chacune des cellules principale 100 et secondaire 200 peut être formée d'un ensemble monobloc ou lui-même par assemblage de plusieurs pièces.

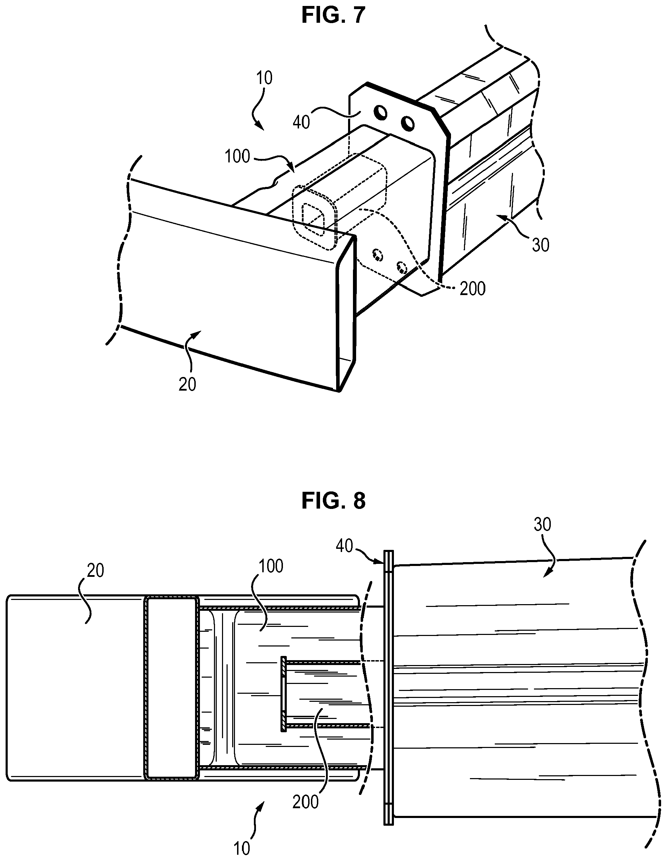

Ainsi selon le mode de réalisation particulier représenté sur les figures 7 à 10 annexées, la cellule principale 100 est formée par assemblage de deux pièces 110, 120 en C montées tête bêche, concavités en regard, pour former en combinaison un ensemble tubulaire de section rectangulaire.

En revanche selon le mode de réalisation particulier représenté sur les figures 7 à 10 annexées, la cellule secondaire 200 est formée d'une pièce monobloc et d'épaisseur supérieure à la cellule principale 100 pour présenter une résistance à la déformation en compression longitudinale, supérieure à celle de la cellule principale 100.

Lors de sa sollicitation, la cellule secondaire 200 peut se déformer sous l'effet d'un choc de deuxième niveau d'énergie et/ou transmettre un effort résultant à une pièce de structure avale.

On a illustré schématiquement sur la figure 2 annexée la déformation de la cellule principale 100 sous l'effet d'un choc frontal d'un premier niveau d'énergie n'atteignant pas le deuxième niveau d'énergie précité. Seule la cellule principale 100 est déformée. Une réparation peut être réalisée facilement et à faible coût par un simple remplacement de cette seule cellule principale 100, la cellule secondaire 200 ainsi que les structures avales 30 n'ayant pas subi de détériorations.

On a illustré schématiquement sur la figure 3 la déformation des deux cellules, principale 100 et secondaire 200, sous l'effet d'un choc frontal de niveau d'énergie supérieur. En effet la cellule secondaire 200 est également sollicitée lorsque la cellule principale 100, suite à sa déformation, atteint une longueur égale à celle de la cellule secondaire 200, pour absorber le complément d'énergie dû au choc.

Comme indiqué précédemment selon l'invention la cellule secondaire 200 n'est pas centrée sur la cellule principale 100. Cet excentrement peut être adapté pour compenser au moins partiellement une dissymétrie du niveau de résistance de l'ensemble de la structure concernée 30 ou encore pour orienter la direction d'application d'un effort sur une structure avale 30 dans une direction oblique non parallèle à la direction incidente de l'effort et ce faisant le plus souvent non parallèle à l'axe longitudinal O-O de la structure avale 30.

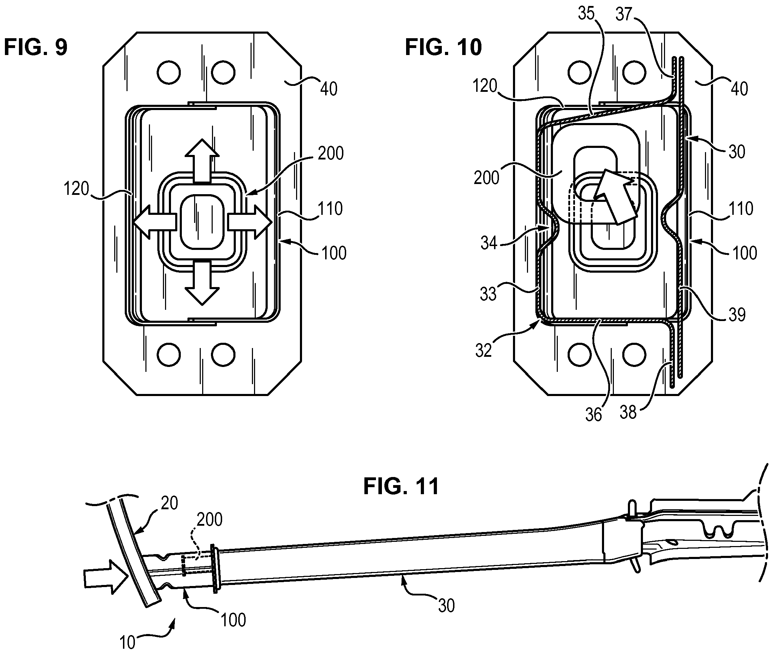

La figure 9 représente une vue en coupe transversale d'un système amortisseur et illustre diverses possibilités d'excentrer la cellule secondaire 200 dans la cellule principale 100. On peut en effet excentrer la cellule secondaire 200 par rapport à la cellule principale 100 en décalant les axes O-O et A-A dans un même plan horizontal, dans un même plan vertical, voire toute combinaison horizontal et vertical, selon la configuration particulière de structure impliquée et l'effet recherché.

On a représenté schématiquement en superposition sur la figure 10 la section droite d'un longeron 30 formé par la combinaison d'une pièce 32 de section en forme de chapeau et d'une pièce de couverture 39. La pièce 32 est formée par un fond de pièce 33 possédant une nervure de raidissement central 34 et deux feuillures 37 et 38 parallèle au fond de pièce 33 et raccordées à celui-ci par des murs 35 et 36 orthogonaux. La pièce de couverture 39 referme cette pièce 32 en chevauchant les feuillures 37 et 38.

L'on comprendra que de par sa structure, un tel longeron 30 n'étant pas symétrique par rapport à l'axe longitudinal O-O (les deux murs 35 et 36 ne sont pas symétriques sur la figure 10 et les feuillures 37 et 38 combinées à la pièce de couverture 39 ne sont pas symétriques du fond de pièce 33), il présente une résistance à la déformation non symétrique par rapport à un axe longitudinal O-O correspondant au centre géométrique du longeron.

En positionnant la cellule secondaire 200 non pas en position centrée dans la cellule principale 100, mais en position excentrée dans la cellule principale 100, par exemple dans le coin supérieur gauche selon la représentation de la figure 10, l'on peut contrôler le sens de déformation de ce longeron 30, malgré sa dissymétrie, et par exemple en privilégiant l'application de l'effort sur la face interne du longeron 30 correspondant au fond de pièce 33 grâce à la position adjacente de la cellule secondaire 200, imposer une déformation du longeron 30 vers l'extérieur du compartiment moteur. En chargeant ainsi la face interne des longerons ou brancards 30, on privilégie un écartement de ceux-ci, limitant les risques pour les passagers d'un véhicule. Ceci est schématisé sur la figure 11 par des flèches symbolisant l'amplitude des efforts, de longueur plus importante sur la face interne du longeron 30 que sur sa face extérieure.

De même en chargeant les longerons 30 au voisinage de leur face supérieure on privilégie un pliage de ces longerons 30 vers le bas et on évite ainsi une remontée du moteur.

Selon la représentation non limitative donnée sur les figures annexées, l'interface entre l'extrémité avant du longeron 30 et les extrémités arrières des cellules principale 100 et secondaire 200 est réalisée par une plaque 40 intercalée perpendiculaire à l'axe O-O.

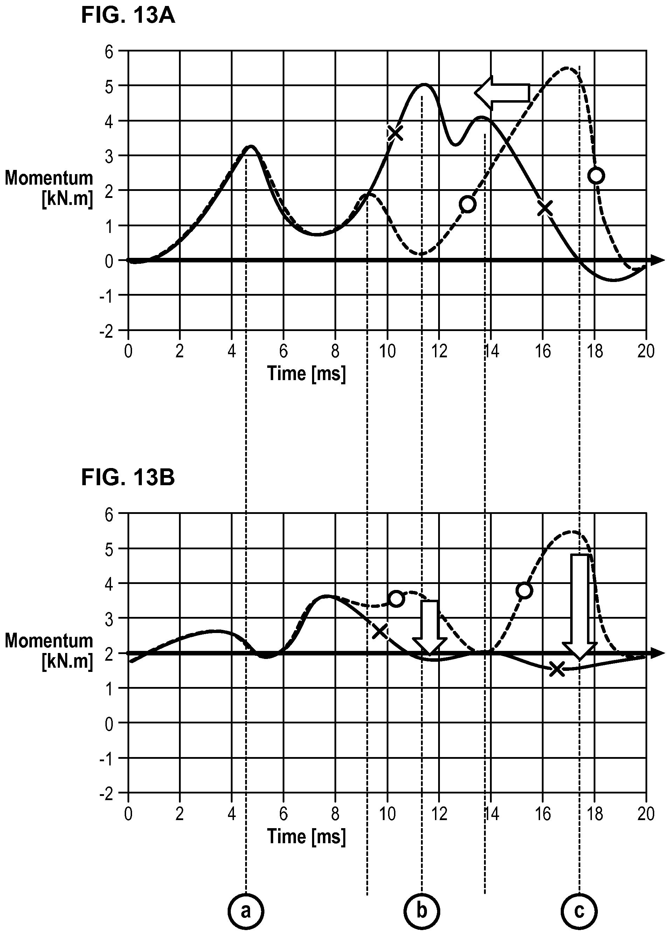

Comme indiqué précédemment la figure 13A représente les moments autour de l'axe vertical Z en fonction du temps respectivement pour un système amortisseur conforme à la présente invention sur la courbe marquée d'une croix et pour un amortisseur classique pour la courbe marquée d'un cercle.

Sur cette figure, comme sur la figure 13B, les instants référencés « a », « b » et « c » correspondent respectivement au début de la déformation de la cellule principale 100 sous l'effet d'un impact, au début de la déformation de la cellule secondaire 200 sous l'effet d'un choc atteignant le deuxième niveau d'énergie et au début d'un pliage des longerons 30 autour de l'axe vertical Z.

L'examen comparé des deux courbes de la figure 13A montre que selon l'invention, on obtient une flexion du longeron 30 plus rapide et un écrêtage du moment, ce qui permet de réduire l'effort ou la décélération que les passagers du véhicule équipé d'un amortisseur selon l'invention sont susceptibles de subir.

La figure 13B représente quant à elle les moments autour de l'axe horizontal Y en fonction du temps respectivement pour un système amortisseur conforme à la présente invention sur la courbe marquée d'une croix et pour un amortisseur classique pour la courbe marquée d'un cercle.

L'examen comparé des deux courbes illustrées sur la figure 13B montre que le système amortisseur conforme à la présente invention permet d'écrêter très sensiblement le moment résultant et donc le risque de flexion autour de l'axe horizontal Y. Les risques de montée du moteur sont ainsi réduits, voire nuls.

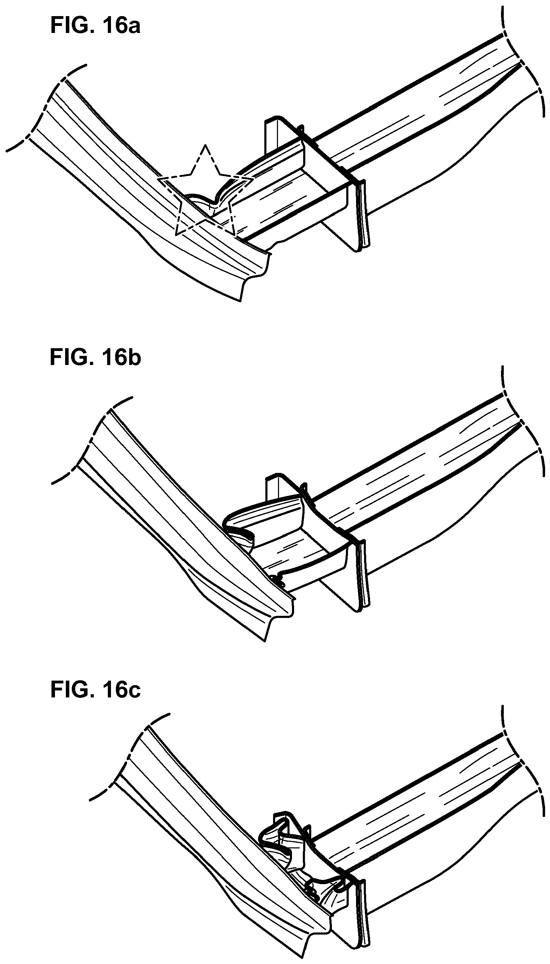

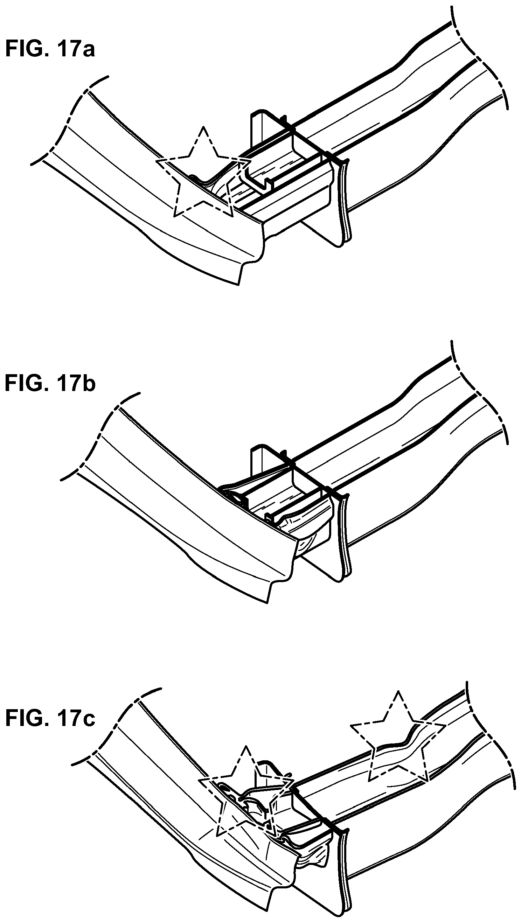

L'examen comparé des figures 16a, 16b et 16c qui correspondent à l'état de la technique et des figures 17a, 17b et 17c qui correspondent à l'invention, montre que grâce au moment appliqué sur la structure avale du fait que la cellule secondaire induit un axe de déformation différent de la cellule principale, l'invention permet une flexion de la structure avale autour de l'axe de flexion vertical en Z (générant ainsi un ou plusieurs effets rotules).

Bien entendu la présente invention n'est pas limitée aux modes de réalisation qui viennent d'être décrits mais s'étend à toutes variantes conformes à son esprit.

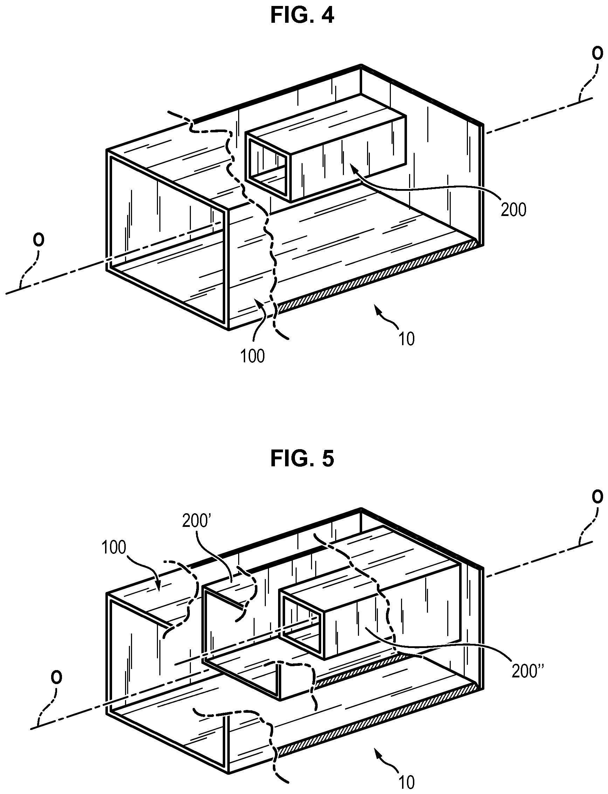

Ainsi par exemple comme on l'a schématisé sur la figure 5, le système conforme à la présente invention peut comprendre plusieurs cellules secondaires 200, par exemple deux cellules secondaires 200' et 200" imbriquées l'une dans l'autre et présentant le cas échéant des longueurs différentes de sorte que ces cellules secondaires 200' et 200" soient sollicitées successivement selon le niveau d'effort des chocs frontaux appliqués. Il en résulte que selon le mode de réalisation particulier illustré sur la figure 5 le système conforme à la présente invention comprend une cellule principale 100 qui loge, imbriquées en gigogne une première cellule secondaire 200' et une deuxième cellule secondaire 200" de plus faible dimensions, l'une au moins des cellules secondaires 200', 200" étant excentrée par rapport à la cellule principale 100. Les cellules secondaires 200' et 200" peuvent elles-mêmes être centrées entre elles ou excentrées entre elles selon les effets recherchés.

Selon une deuxième forme de réalisation de l'invention, la cellule secondaire 200 est centrée sur la cellule principale 100.

Dans la description qui suit, les éléments identiques avec la première forme de réalisation portent les mêmes références.

La cellule secondaire 200 présente par exemple une géométrie adaptée pour induire un axe de déformation différent de la cellule principale 100.

On voit sur la figure 18a que la cellule secondaire 200 présente par exemple sur au moins une paroi 208 une épaisseur plus importante que sur les autres parois 202, 204, 206.

On voit sur la figure 18b que la cellule secondaire 200 présente sur au moins une paroi une rainure 210 s'étendant parallèlement à l'axe longitudinal O-O. La rainure présente par exemple une section arrondie orientée vers l'intérieur de la pièce.

On voit sur la figure 18c que la cellule secondaire 200 est formée d'une pièce tubulaire présentant une section de la forme d'un hexagone non régulier, centrée sur l'axe longitudinal O-O. La pièce tubulaire présente par exemple une première, une deuxième et une troisième paire de parois 206, 208; 202, 204; 212, 214. Les deux premières parois 206, 208 sont parallèles entre elles, et les deux deuxièmes parois 202, 204 sont parallèles entre elles et sensiblement perpendiculaires aux deux premières parois 206, 208. Les deux deuxièmes parois 202, 204 sont adjacentes à l'une des premières parois 208, et les deux troisièmes parois 212, 214 sont chacune adjacentes à l'une des deuxièmes parois 202, 204 d'une part, et à l'autre des premières parois 206 d'autre part et forment avec chacune de leurs parois adjacentes un angle obtus, de préférence de même valeur. En alternative illustrée à la figure 18d, les troisièmes parois 212, 214 présentent une section arrondie orientée vers l'intérieur de la pièce.

On voit sur la figure 18e que la cellule secondaire 200 est formée d'une pièce allongée présentant une section en forme de U. La pièce présente par exemple une paire de parois parallèles 202, 204 entre elles et sensiblement perpendiculaires à une troisième paroi 206.

On voit sur la figure 18f que la cellule secondaire 200 est formée d'une première pièce 248 allongée présentant une section globalement en forme de U et une deuxième pièce 250 allongée globalement plane, la deuxième pièce 250 étant rapportée sur la première pièce 248 de sorte à former une pièce globalement tubulaire à section rectangulaire centrée sur l'axe longitudinal O-O. Les première et deuxième pièces 248, 250 sont chacune pourvues d'une paire d'ailettes 252, 254; 256, 258 par l'intermédiaire desquelles les première et deuxième pièces 248, 250 sont fixées l'une à l'autre, notamment par soudage. On comprendra qu'en formant une double épaisseur au niveau des ailettes 252, 254 ; 256, 258, lors de l'assemblage des première et deuxième pièces 248, 250, la cellule secondaire 200 aura un axe de déformation différent de la cellule principale 100.

Plus précisément, on voit sur la figure 18f que la première pièce 248 présente une paire de parois parallèles 202, 204 entre elles et sensiblement perpendiculaires à une troisième paroi 208. La première pièce 248 comprend en outre deux ailettes 252, 254, s'étendant chacune dans le prolongement de l'une des première ou deuxième parois 202, 204, à leur extrémité opposée à la troisième paroi 208, une première 252 des ailettes s'étendant globalement orthogonalement à la première paroi 202 et parallèlement à la troisième paroi 208, la deuxième ailettes 254 s'étendant globalement dans le même plan que la deuxième paroi 204 et orthogonalement à la troisième paroi 208. La deuxième pièce 250 comprend une paroi 206 prolongée à des extrémités opposées par une ailette 256, 258, une première 256 des ailettes s'étendant globalement orthogonalement à la paroi 206, la deuxième ailette 258 s'étendant dans le même plan que ladite paroi 206. La deuxième pièce 250 est rapportée sur la première pièce 248 de sorte que leurs ailettes 252, 254; 256, 258 respectives soient en regard les unes des autres. Plus précisément, la première ailette 252 de la première pièce 248 est placée en regard de la deuxième ailette 258 de la deuxième pièce 250, tandis que la deuxième ailette 254 de la première pièce 248 est placée en regard de la première ailette 256 de la deuxième pièce 250. Les ailettes 252, 254 ; 256, 258 sont par exemple fixées l'une à l'autre par soudage.

On voit sur la figure 18g que la cellule secondaire 200 est formée d'une pièce tubulaire centrée sur l'axe longitudinal O-O présentant une section tétragonale et comprenant au moins deux parois 206, 204, 208 adjacentes, non orthogonales entre elles. Dans l'exemple illustré à la figure 18g, la section de la pièce tubulaire est par exemple trapézoïdale.

On voit sur la figure 18h que la cellule secondaire 200 est formée d'une pièce tubulaire centrée sur l'axe longitudinal O-O réalisée par pliage d'une plaque, le tube étant refermé par un chevauchement 216 des bords 218, 220 de ladite plaque. En variante, le tube est refermé par soudage des bords 218, 220 de la plaque entre eux.

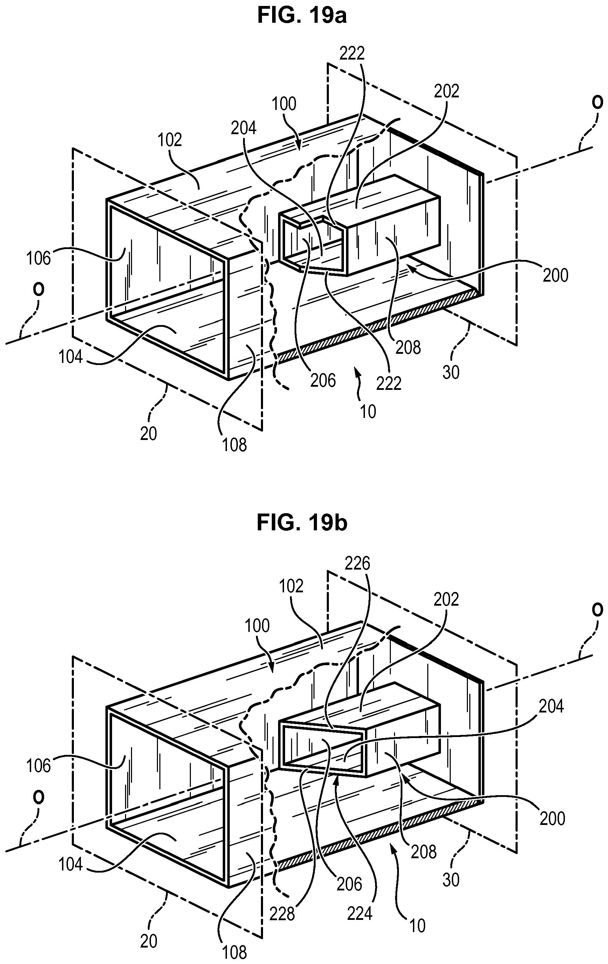

Alternativement, comme illustré aux figures 19a et 19b, la cellule secondaire 200 présente par exemple des découpes 222 pour induire un axe de déformation différent de la cellule principale 100.

On voit sur la figure 19a que le bord d'une des parois de la cellule secondaire 200 est taillé en escalier, tandis que le bord d'une autre paroi est taillé à l'oblique par rapport à l'axe longitudinal O-O.

On voit sur la figure 19b que la cellule secondaire 200 est formée d'une pièce allongée centrée sur l'axe longitudinal O-O, et dont l'extrémité longitudinale 224 en regard de la pièce amont 20 est taillée en biseau relativement à l'axe longitudinal O-O. Dans l'exemple illustré à la figure 19b, les bords 226, 228 des parois horizontales 202, 204 sont taillés à l'oblique de sorte qu'ils ne forment pas un angle droit avec l'axe longitudinal O-O.

Alternativement, la cellule secondaire 200 présente des éléments d'amorce 230, 232 configurés pour amorcer la déformation de la pièce dans un axe de déformation différent de la cellule principale 100.

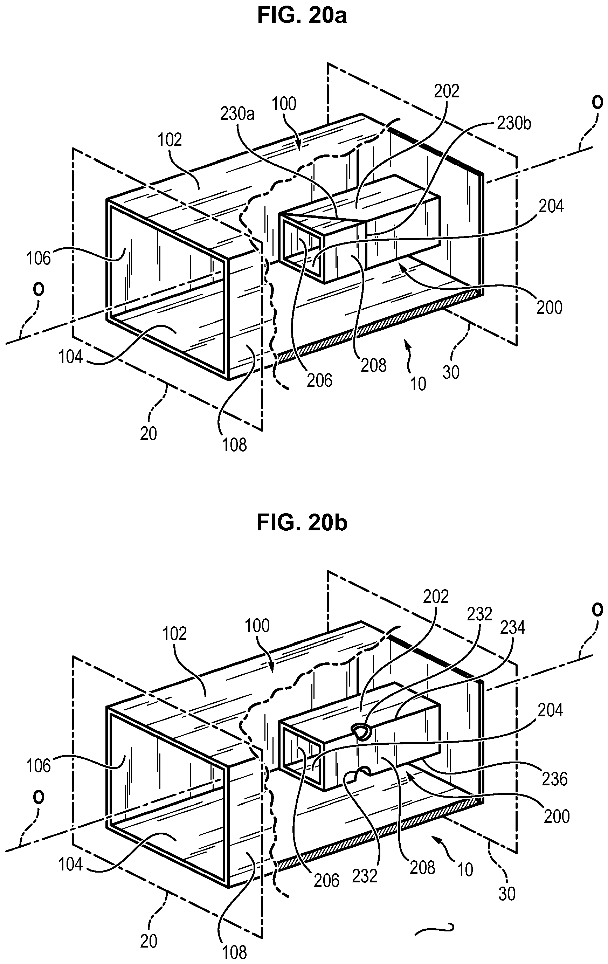

On voit sur la figure 20a que la cellule secondaire 200 présente des pré-déformations 230 de sorte à amorcer la déformation de la pièce dans un axe déformation différent de la cellule principale 100. Dans l'exemple illustré à la figure 20a, la cellule secondaire 200 présente sur une première paroi 202, une première ligne de déformation 230a, et sur une deuxième paroi 208 adjacente une deuxième ligne de déformation 230b. Les première et deuxième lignes de déformation 230a, 230b sont de préférence en continuité l'une avec l'autre.

On voit sur la figure 20b que la cellule secondaire 200 présente des ouvertures 232 ménagées le long d'arrêtes 234, 236 de la pièce de sorte à amorcer la déformation de la pièce dans un axe de déformation différent de la cellule principale 100.

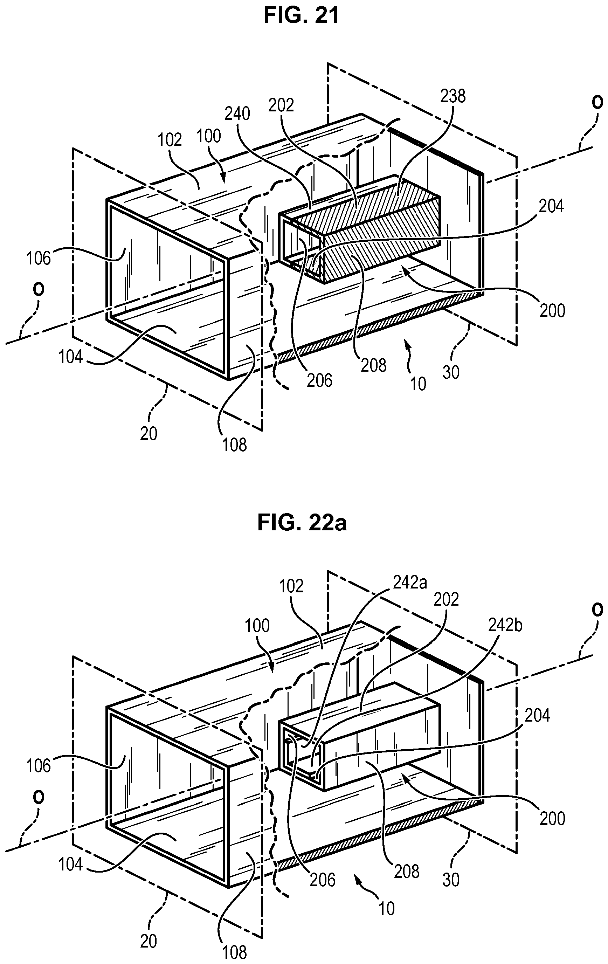

Alternativement, comme illustré à la figure 21, la cellule secondaire 200 est traitée thermiquement de sorte à former au moins une zone de plus faible résistance mécanique 238 destinée à induire un axe de déformation différent de la cellule principale 100. En particulier, dans l'exemple illustré à la figure 21, la cellule secondaire 200 est formée d'une pièce tubulaire présentant une section rectangulaire, ladite pièce comprenant sur une première portion en forme de U de la section une zone de résistance mécanique plus faible 238, et sur une deuxième portion en forme de U de la section de la pièce une zone de résistance mécanique plus forte 240.

Alternativement, la cellule secondaire 200 présente des renforts 242, 244 pour induire un axe de déformation différent de la cellule principale 100. Les renforts 242, 244 peuvent être placés à l'intérieur ou à l'extérieur de la cellule secondaire 200.

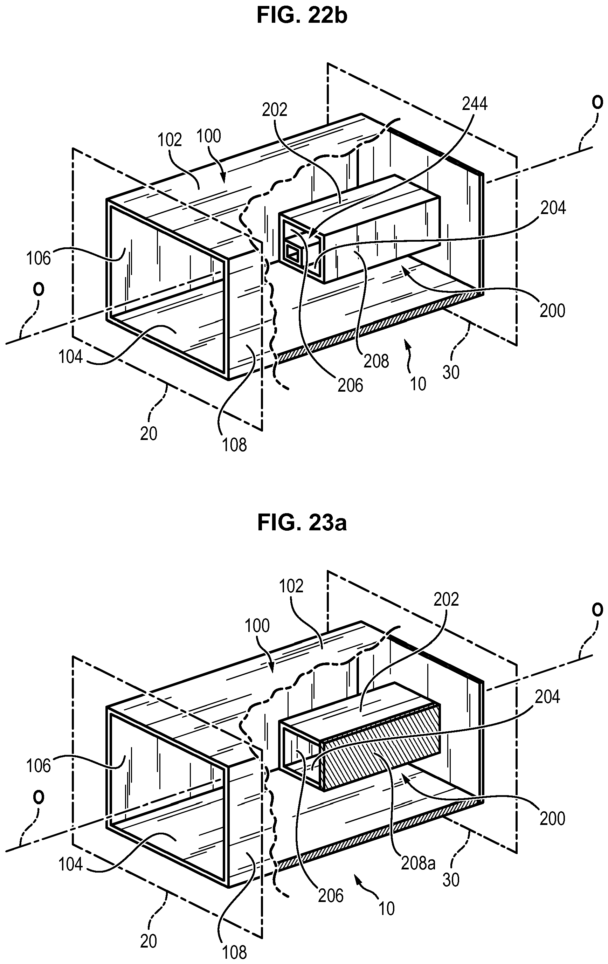

Dans les exemples illustrés aux figures 22a et 22b, les renforts 242, 244 sont de géométrie homothétique d'au moins une partie de la cellule secondaire 200.

En particulier, on voit sur la figure 22a que la cellule secondaire 200 est formée d'une pièce tubulaire à section rectangulaire et est complétée par une pièce de renfort 242 formée de deux parois 242a, 242b en équerre, la pièce de renfort 242 étant placée contre deux parois adjacentes 206, 204 entre elles de la cellule secondaire 200, de sorte à doubler localement l'épaisseur des parois 206, 204 de la cellule secondaire 200. La pièce de renfort 242 est par exemple fixée à la cellule secondaire 200 par collage ou par soudage.

On voit sur la figure 22b que la cellule secondaire 200 est formée d'une pièce tubulaire à section rectangulaire et est complétée par une pièce de renfort 244 tubulaire à section rectangulaire, placée à l'intérieur de la cellule secondaire 200 et excentrée par rapport à l'axe longitudinal O-O. La pièce de renfort 244 peut être de même longueur de la cellule secondaire 200 ou d'une longueur inférieure à celle de la cellule secondaire 200. La pièce de renfort 244 peut être fixée à la cellule secondaire 200.

Alternativement, la cellule secondaire 200 comprend un corps principal formé d'un premier matériau et un élément secondaire formé d'un deuxième matériau présentant des caractéristiques mécaniques différentes du premier matériau, notamment le module d'Young, la densité, la limite élastique ou la dureté (ou limite à la rupture). Le corps principal est par exemple formé d'acier, tandis que l'élément secondaire est formé d'aluminium ou d'un matériau composite.

On voit sur la figure 23a que la cellule secondaire 200 est formée d'un corps principal 202, 204, 206 allongé présentant une section en forme de U sur lequel est rapportée une plaque 208a (l'élément secondaire) formée d'un matériau différent du corps principal 202, 204, 206, de sorte à former une pièce tubulaire centrée avec l'axe longitudinal O-O.

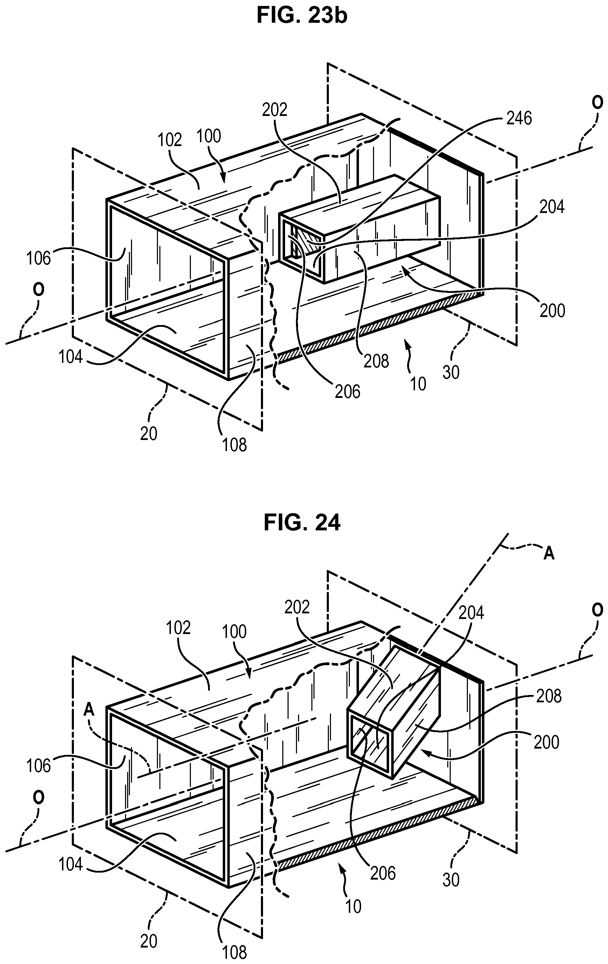

On voit sur la figure 23b que la cellule secondaire 200 est formée d'un corps principal 202, 204, 206, 208 tubulaire présentant une section rectangulaire centrée sur l'axe longitudinal O-O, le corps principal 202, 204, 206, 208 étant complété par une plaque 246 (l'élément secondaire) formée d'un matériau différent du corps principal 202, 204, 206, 208, placée contre l'une des parois 206 à l'intérieur dudit corps. La plaque 246 est par exemple fixée à la paroi par collage, par rivetage, par soudage au laser, par soudage par point ou par soudage MIG-MAG (en terminologie anglo-saxonne « *Metal inert gas* » et « *Métal active gas* »).

L'homme du métier comprendra que les alternatives présentées ci-dessus peuvent avantageusement être combinées entre elles.

L'homme du métier comprendra également que les première et deuxième formes de réalisation décrites ci-dessus peuvent avantageusement être combinées.

Selon les différentes formes de réalisation illustrées sur les figures annexées et précédemment décrites, la cellule secondaire 200 repose contre un élément tel qu'une plaque 40 servant de support à l'extrémité arrière de la cellule principale 100 opposée à l'extrémité avant de cette cellule principale 100 adjacente à l'élément supposé recevoir le choc. L'invention s'applique cependant également à toute variante selon laquelle la cellule secondaire 200 repose contre un élément servant de support à l'extrémité avant de la cellule principale 100 adjacente à l'élément supposé recevoir le choc, ou en toute position intermédiaire sur la longueur de la cellule principale 100, dès lors que la longueur de la cellule secondaire 200 est inférieure à celle de la cellule principale 100. Ce qui importe en effet dans le cadre de l'invention est que la cellule secondaire 200 ne commence à être sollicitée à la déformation qu'une fois la longueur de la cellule principale 100, initialement supérieure, soit réduite à celle de la cellule secondaire 200.

Selon les formes de réalisation précédemment décrites, la cellule secondaire 200 possède au moins sur une partie de sa longueur un axe central parallèle à un axe central de la cellule principale 200. Selon une troisième forme conforme à l'invention et illustrée à la figure 24, la cellule secondaire 200 est centrée sur un axe oblique par rapport à l'axe central de la cellule principale 200. Cette troisième forme de réalisation est par ailleurs compatible avec l'ensemble des variantes des formes de réalisation précédemment décrites.

## Revendications

1. Système amortisseur de choc pour véhicule automobile comprenant une cellule principale (100) adaptée pour être déformée en cas de choc d'un premier niveau d'énergie et une cellule secondaire (200) de plus faible longueur que la cellule principale (100), adaptée pour être sollicitée en complément de la cellule principale (100), après une première phase de déformation de la cellule principale (100), lorsque le système reçoit un choc d'un deuxième niveau d'énergie supérieur au premier,
**caractérisé en ce que**
la cellule secondaire (200) est excentrée par rapport à la cellule principale (100) et/ou
la cellule secondaire (200) possède un axe de déformation différent de la cellule principale et/ou
la cellule secondaire (200) est adaptée pour induire un axe de déformation différent de la cellule principale (100) tel que la cellule secondaire (200) est adaptée pour orienter la résultante d'application d'un effort sur une structure avale (30) dans une direction non parallèle à l'axe longitudinal de cette structure avale.

2. Système selon la revendication 1, **caractérisé en ce que** la cellule secondaire (200) possède et/ou est adaptée pour induire un axe de déformation différent de la cellule principale (100) pour compenser au moins partiellement une dissymétrie du niveau de résistance de l'ensemble de la structure avale concernée.

3. Système selon la revendication 1 ou la revendication 2, **caractérisé en ce que** la cellule secondaire (200) possède et/ou est adaptée pour induire un axe de déformation différent de la cellule principale (100) pour orienter la résultante d'application d'un effort sur une structure avale (30) dans une direction non parallèle à la direction d'application de l'effort du au choc et ce faisant typiquement dans une direction non parallèle à l'axe longitudinal de cette structure avale (30).

4. Système selon l'une des revendications 1 à 3, **caractérisé en ce que** la cellule secondaire (200) présente une géométrie adaptée pour induire un axe de déformation différent de la cellule principale (100).

5. Système selon la revendication 4, **caractérisé en ce que** la géométrie de la cellule secondaire (200) est adaptée pour induire un axe de déformation différent de la cellule principale (100) est choisie parmi le groupe comprenant :
- une épaisseur de paroi différente entre deux parois de la cellule secondaire (200),
- une rainure (210) s'étendant sur une paroi de la cellule secondaire (200),
- une section de la forme d'un hexagone non régulier,
- une section en forme de U,
- un assemblage d'une première et d'une deuxième pièces (248, 250) chacune pourvues d'une paire d'ailettes (252, 254; 256, 258) par l'intermédiaire desquelles les première et deuxième pièces sont fixées l'une à l'autre de sorte à former la cellule secondaire (200),
- une section tétragonale avec au moins deux parois adjacentes (204, 206, 208) de la cellule secondaire (200) non orthogonales entre elles,
- un chevauchement (216) de bords (218, 220) d'une plaque à partir de laquelle est formée la cellule secondaire (200) par pliage,
- une soudure entre eux de bords d'une plaque à partir de laquelle est formée la cellule secondaire (200) par pliage.

6. Système selon l'une des revendications 1 à 5, **caractérisé en ce que** la cellule secondaire (200) présente une zone de plus faible résistance mécanique (238) obtenue par traitement thermique de la cellule secondaire (200).

7. Système selon l'une des revendications 1 à 6, **caractérisé en ce que** la cellule secondaire (200) présente des renforts (242, 244).

8. Système selon l'une des revendications 1 à 7, **caractérisé en ce que** la cellule secondaire comprend un corps principal formé d'un premier matériau, et un élément secondaire (208a, 246) formé d'un deuxième matériau présentant des caractéristiques mécaniques différentes du premier matériau.

9. Système selon l'une des revendications 1 à 8, **caractérisé en ce que** la cellule secondaire (200) est logée dans la cellule principale (100).

10. Système selon l'une des revendications 1 à 9, **caractérisé en ce que** l'une au moins des cellules (100, 200) est formée d'une pièce tubulaire centrée sur un axe longitudinal parallèle à la direction d'application d'un effort sous l'effet d'un choc.

11. Système selon l'une des revendications 1 à 10, **caractérisé en ce qu'**il comprend plusieurs cellules secondaires (200', 200") imbriquées en gigogne dans la cellule principale (100).

12. Système selon l'une des revendications 1 à 11, **caractérisé en ce que** la cellule secondaire (200) est formée d'une pièce d'épaisseur globalement supérieure à la cellule principale (100) pour présenter une résistance à la déformation en compression longitudinale, supérieure à celle de la cellule principale (100).

13. Système selon l'une des revendications 1 à 12, **caractérisé en ce qu'**il est placé entre une extrémité d'une traverse (20) de parechoc et une extrémité avant d'un longeron avant (30) encadrant un compartiment moteur de véhicule automobile, particulièrement
**caractérisé en ce que** la cellule secondaire (200) est placée en position excentrée dans la cellule principale (100), en position adjacente à la face interne d'un longeron (30) aval.

## Patentansprüche

1. Stoßdämpferanordnung für ein Kraftfahrzeug umfassend eine Hauptzelle (100), die angepasst ist, um bei einem Stoß einer ersten Energiestufe verformt zu werden, und eine Nebenzelle (200) einer kleineren Länge als die Hauptzelle (100), die angepasst ist, um ergänzend zur Hauptzelle (100) nach einer ersten Verformungsphase der Hauptzelle (100) vorgespannt zu werden, wenn die Anordnung einen Stoß einer zweiten höheren Energiestufe erhält,
**dadurch gekennzeichnet, dass**
die Nebenzelle (200) exzentrisch bezüglich der Hauptzelle (100) ist und/oder
die Nebenzelle (200) eine Verformungsachse aufweist, die verschieden von der der Hauptzelle ist und/oder
die Nebenzelle (200) angepasst ist, um eine Verformungsachse zu veranlassen, die verschieden von der der Hauptzelle (100) ist, so dass die Nebenzelle (200) angepasst ist, um die Resultante einer Beanspruchung an einer Vorderstruktur (30) in einer zur Längsachse der Vorderstruktur nicht parallelen Richtung auszurichten.

2. Anordnung nach Anspruch 1, **dadurch gekennzeichnet, dass** die Nebenzelle (200) eine Verformungsachse umfasst oder sie angepasst ist, eine Verformungsachse zu veranlassen, die verschieden von der der Hauptzelle (100) ist, um mindestens teilweise jedwede Widerstandsstufenasymmetrie der gesamten Vorderstruktur auszugleichen.

3. Anordnung nach Anspruch 1 oder Anspruch 2, **dadurch gekennzeichnet, dass** die Nebenzelle (200) eine Verformungsachse aufweist oder sie angepasst ist, eine Verformungsachse zu veranlassen, die verschieden von der der Hauptzelle (100) ist, um die Resultante einer Beanspruchung an einer Vorderstruktur (30) nach einer zur Stoßbeanspruchungsrichtung nicht parallelen Richtung auszurichten und wobei dies typischerweise in einer zur Längsachse der Vorderstruktur (30) nicht parallelen Richtung erfolgt.

4. Anordnung nach einem der Ansprüche 1 bis 3, **dadurch gekennzeichnet, dass** die Nebenzelle (200) eine Geometrie aufweist, die angepasst ist, um eine Verformungsachse zu veranlassen, die verschieden von der der Hauptzelle (100) ist.

5. Anordnung nach Anspruch 4, **dadurch gekennzeichnet, dass** die Geometrie der Nebenzelle (200) angepasst ist, um eine Verformungsachse zu veranlassen, die verschieden von der der Nebenzelle (100) ist und aus folgender Gruppe ausgewählt ist:
- einer Wandstärke, die zwischen zwei Wänden der Nebenzelle (200) variiert,
- einer Nut (210), die sich entlang einer Wand der Nebenzelle (200) erstreckt,
- einem Abschnitt in der Form eines unregelmäßigen Sechsecks,
- einem U-förmigen Abschnitt,
- einer Anordnung eines ersten und eines zweiten Teils (248, 250), die jeweils mit einem Flügelpaar (252, 254; 256, 258) versehen sind, durch die das erste und das zweite Teil aneinander derart befestigt sind, dass sie die Nebenzelle (200) bilden,
- einem tetragonalen Abschnitt mit mindestens zwei aneinander angrenzenden Wänden (204, 206, 208) der Nebenzelle (200), die nicht orthogonal zueinander sind,
- einer Überlappung (216) der Kanten (218, 220) einer Plaque, aus der die Nebenzelle (200) durch Faltung gebildet wird,
- einer Schweißung, die zwischen zwei Kanten einer Platte vorhanden ist, aus welcher die Nebenzelle (200) durch Faltung gebildet wird.

6. Anordnung nach einem der Ansprüche 1 bis 5, **dadurch gekennzeichnet, dass** die Nebenzelle (200) einen Bereich (238) geringerer mechanischer Festigkeit aufweist, der durch thermische Behandlung der Nebenzelle (200) erhalten worden ist.

7. Anordnung nach einem der Ansprüche 1 bis 6, **dadurch gekennzeichnet, dass** die Nebenzelle (200) Verstärkungen (242, 244) aufweist.

8. Anordnung nach einem der Ansprüche 1 bis 7, **dadurch gekennzeichnet, dass** die Nebenzelle einen Hauptkörper umfasst, der aus einem ersten Material besteht, und ein Nebenelement (208a, 246) umfasst, das aus einem zweiten Material besteht, das verschiedene mechanische Eigenschaften im Vergleich zum ersten Material aufweist.

9. Anordnung nach einem der Ansprüche 1 bis 8, **dadurch gekennzeichnet, dass** die Nebenzelle (200) in der Hauptzelle (100) angeordnet ist.

10. Anordnung nach einem der Ansprüche 1 bis 9, **dadurch gekennzeichnet, dass** mindestens eine Zelle (100, 200) aus einem röhrenförmigen Teil besteht, das auf einer zur Stoßbeanspruchungsrichtung parallelen Längsachse zentriert ist.

11. Anordnung nach einem der Ansprüche 1 bis 10, **dadurch gekennzeichnet, dass** sie mehrere Nebenzellen (200', 200") umfasst, die ineinander verschachtelt innerhalb der Hauptzelle (100) angeordnet sind.

12. Anordnung nach einem der Ansprüche 1 bis 11, **dadurch gekennzeichnet, dass** die Nebenzelle (200) aus einem Teil besteht, dessen Stärke insgesamt größer als die der Hauptzelle (100) ist, um einen höheren Verformungswiderstand entsprechend einer longitudinalen Kompression als die Hauptzelle (100) aufzuweisen.

13. Anordnung nach einem der Ansprüche 1 bis 12, **dadurch gekennzeichnet, dass** sie zwischen einem Ende eines Stoßstangequerträgers (20) und einem Vorderende eines Vorderlängsträgers (30) angeordnet ist, der einen Motorraum eines Kraftfahrtzeugs umrahmt, insbesondere
**dadurch gekennzeichnet, dass** die Nebenzelle (200) exzentrisch in der Hauptzelle (100) angrenzend an der Innenseite eines Vorderlängsträgers (30) angeordnet ist.

## Claims

1. A shock absorber system for a vehicle comprising a main unit (100) adapted to be deformed in the event of an impact with a first energy level and a secondary unit (200) shorter in length than the main unit (100), adapted to be subjected to loads as a complement to the main unit (100), after a first deformation phase of the main unit (100), when the system receives an impact with a second energy level greater than the first,
**characterised in that**
the secondary unit (200) is eccentric with respect to the main unit (100) and/or
the secondary unit (200) has a deformation axis different to that of the main unit (100) and/or
the secondary unity (200) is adapted to induce a deformation axis different to that of the main unit (100) and/or
such that the secondary unit (100) is adapted to orient the resultant of a force applied on a downstream structure (30) in a direction that is not parallel to the longitudinal axis of this downstream structure.

2. The system according to claim 1, **characterised in that** the secondary unit (200) has and/or induces a deformation axis different from the main unit (100) to offset at least partially an asymmetry of the level of strength of the assembly of the relevant downstream structure.

3. The system according to claim 1 or 2, **characterised in that** the secondary unit (200) has and/or induces a deformation axis different from the main unit (100) to orient the resultant force applied on a downstream structure (30) in a direction that is not parallel to the direction of application of the force due to the impact and typically being made in a direction that is not parallel to the longitudinal axis of this downstream structure (30).

4. The system according to any of the claims 1 to 3, **characterised in that** the secondary unit (200) has a geometry that is adapted to induce a deformation axis different from that of the main unit (100).

5. The system according to claim 4, **characterised in that** the geometry of the secondary unit (200) is adapted to induce a deformation axis different from that of the main axis (100) is chosen from among the group comprising:
- a wall thickness that is different between two walls of the secondary unit (200),
- a groove (210) extending along a wall of the secondary unit (200),
- a cross-section in the shape of an irregular hexagon,
- a U-shaped cross-section,
- an assembly of a first and second pieces (248, 250), each one provided with a pair of fins (252, 254; 256, 258) through which the first and second pieces are fastened to each other such that they form the secondary unit (200),
- a tetragonal cross-section with at least two adjacent walls (204, 206, 208) of the secondary unit (200) that are not orthogonal to each other,
- an overlap (216) of edges (218, 220) of a plate from which the secondary unit (200) is formed by folding,
- a weld between them of the edges of a plate from which the secondary unit (200) is formed by folding.

6. The system according to any of claims 1 to 5, **characterised in that** the secondary unit (200) has an area of lower mechanical strength (238) obtained through heat treating the secondary unit (200).

7. The system according to any of claims 1 to 6, **characterised in that** the secondary unit (200) has reinforcements (242, 244).

8. The system according to any of claims 1 to 7, **characterised in that** the secondary unit comprises a main body formed from a first material, and a secondary element (208a, 246) formed from a second material with different mechanical characteristics to those of the first material.

9. The system according to any of the claims 1 to 8, **characterised in that** the secondary unit (200) is housed in the main unit (100).

10. The system according to any of the claims 1 to 9, **characterised in that** at least one of the units (100, 200) is formed by a tubular piece centred on a longitudinal axis that is parallel to the direction of application of a force under the effect of an impact.

11. The system according to any of the claims 1 to 10, **characterised in that** it comprises several secondary units (200', 200") nested in the main unit (100).

12. The system according to any of the claims 1 to 11, **characterised in that** the secondary unit (200) is formed by a piece with an overall thickness greater than the main unit (100) in order to have a resistance to deformation when under longitudinal compression, greater than that of the main unit (100).

13. The system according to any of the claims 1 to 12, **characterised in that** it is placed between an end of a bumper crossbar (20) and a front end of a front beam (30) framing an engine compartment of a vehicle, particularly
**characterised in that** the secondary unit (200) is placed in an eccentric position inside the main unit (100), in a position adjacent to the inner face of the downstream beam (30).
